**Europäisches Patentamt**

**European Patent Office**

**Office européen des brevets**

(11) Veröffentlichungsnummer: **0 435 074 A2**

## (12) EUROPÄISCHE PATENTANMELDUNG

(21) Anmeldenummer: **90123921.0**

(22) Anmeldetag: **12.12.90**

(51) Int. Cl.5: **G01N 27/447**

(30) Priorität: **22.12.89 DE 3942453**

(43) Veröffentlichungstag der Anmeldung:
**03.07.91 Patentblatt 91/27**

(84) Benannte Vertragsstaaten:
**AT BE CH DE DK ES FR GB GR IT LI LU NL SE**

(71) Anmelder: **BOEHRINGER INGELHEIM INTERNATIONAL G.M.B.H.**

**W-6507 Ingelheim am Rhein(DE)**

(72) Erfinder: **Stangelberger, Jutta, Dr.**
**Keylwerthgasse 5**
**A-1190 Wien(AT)**

(54) **Verfahren und Vorrichtung zum Behandeln von Elektrophoreseträgern.**

(57) Ein Verfahren und eine Vorrichtung zum Behandeln von Elektrophoreseträgern, wobei die zur Behandlung verwendete(n) Flüssigkeit(en) (nacheinander) dem zu behandelnden Elektrophoreseträger entlangfließt(en).

Die Vorrichtung weist einen Behälter mit Zufluß und Abfluß für die zur Behandlung verwendeten Flüssigkeiten auf. Der zu behandelnde Elektrophoreseträger befindet sich während der Behandlung in dem durchströmten Teil des Behälters.

EP 0 435 074 A2

# VERFAHREN UND VORRICHTUNG ZUM BEHANDELN VON ELEKTROPHORESETRÄGERN

Die Erfindung betrifft ein Verfahren und eine Vorrichtung zum Behandeln von Elektrophoreseträgern, wobei die zur Behandlung verwendete Flüssigkeit dem zu behandelnden Elektrophoreseträger entlangfließt.

Die analytische Bestimmung von kolloidalen und makromolekularen Stoffen, z.B. von Proteinen, erfolgt zweckmäßig unter Zuhilfenahme von Elektrophorese. Diese bekannte Bestimmungsmethode besteht aus den Schritten elektrophoretische Auftrennung und Nachbehandlung, wodurch die Fraktionen der Probe auf dem Träger fixiert und für die darauf folgende Auswertung vorbereitet werden. Wenn die Fraktionen durch optische Verfahren bestimmt werden sollen, dient die Nachbehandlung zur Sichtbarmachung der Fraktionen auf dem Elektrophoreseträger. Dazu sind mehrere chemische Umsetzungen (z.B. Färben und Entfärben) erforderlich. Diese Umsetzungen sind durch Waschschritte voneinander getrennt. Manche Elektrophoreseträger müssen vor ihrem Einsatz in der Elektrophorese ausgewaschen werden, (um unerwünschte Bestandteile (z.B. aus der Polymerisierung zurückgebliebene Monomere) zu entfernen) und eventuell mit Wasser, Pufferlösung oder Reagenz (z.B. Harnstoff) beladen werden.

Übliche Elektrophoreseträger sind Gele (z.B. Agarosegele, Polyacrylamidgele). Diese werden entweder mit festen Trägern oder ohne zusätzlichen Träger eingesetzt. Die Gele können z.B. auf Folien aufpolymerisiert sein oder auf Platten aufgegossen (für horizontale Elektrophorese) oder zwischen 2 Platten gegossen (für vertikale Elektrophorese) sein. Auch netzverstärkte Gele werden verwendet. Übliche Größen der verwendeten Elektrophoreseträger sind z.B. (in cm): 30 x 20, 16 x 18, 3 x 8, 10 x 15, 7 x 15, 5 x 1 oder 5 x 2. Diese Elektrophoreseträger werden bei den üblichen Methoden mit den verschiedensten Schichtdicken verwendet. Auch zylindrisch geformte Elektrophoreseträger sind noch in Verwendung. Die genannten Träger sind meist sowohl für eindimensionale als auch für zweidimensionale Elektrophorese verwendbar. Das erfindungsgemäße Verfahren und die dafür geeignete Vorrichtung sind für alle genannten Elektrophoreseträger geeignet. Dabei ist es zweckmäßig, kleinere Stücke einzeln oder zu mehreren in Rahmen zu halten.

In dem US-Patent Nr. 4 391 689 wird ein Gerät beschrieben, das eine große Anzahl von Wannen aufweist, die für die einzelnen Schritte der Bestimmungsmethode vorgesehen sind. In diesem Gerät wird der Elektrophoreseträger mechanisch von einer Wanne in die andere befördert. Das US-Patent Nr. 4 222 843 beschreibt ein Gerät, in dem eine Trommel enthalten ist, die den Elektrophoreseträger trägt und wiederholt in eine darunter befindliche Wanne eintaucht. Die für die Umsetzungen und Waschungen notwendigen Flüssigkeiten werden nacheinander in der Wanne vorgelegt. WO 87/05111 beschreibt ein Gerät für die Nachbehandlung von Elektrophoreseträgern, das aus einem Behälter besteht, der an seinem Deckel eine drehbare Haltevorrichtung aufweist, in die der Elektrophoreseträger eingespannt wird. Durch diese Haltevorrichtung wird das Gel in der Wanne und somit in der jeweils vorgelegten Flüssigkeit bewegt.

Alle diese Geräte sind der immer noch am häufigsten verwendeten alten Methode nachgeahmt, bei der der Elektrophoreseträger manuell für die einzelnen Schritte der Nachbehandlung aus einem Flüssigkeitsbehälter in einen anderen gebracht wird und darin von Hand oder auf einem Rüttelgerät bewegt wird. In den erwähnten Geräten wird das Batch-Verfahren angewendet. Die Flüssigkeiten werden diskontinuierlich zugeführt bzw. der Elektrophoreseträger wird Schritt für Schritt in die jeweils erforderliche Flüssigkeit eingebracht.

Aufgabe der vorliegenden Erfindung ist es, ein Verfahren und eine dafür geeignete Vorrichtung zur Verfügung zu stellen, nach dem die Behandlung und insbesondere Nachbehandlung der Elektrophoreseträger einfach, arbeitssparend und gewünschtenfalls automatisiert ausgeführt werden kann.

Gegenstand der Erfindung ist ein Verfahren zum Behandeln von Elektrophoreseträgern, das dadurch gekennzeichnet ist, daß die zur Behandlung verwendete Flüssigkeit dem Elektrophoreseträger entlang fließt. Ferner betrifft die Erfindung eine Vorrichtung zum Behandeln von Elektrophoreseträgern, die einen Behälter mit Zufluß und Abfluß für die zur Behandlung verwendete Flüssigkeit aufweist, in der die Flüssigkeit den zwischen Zu- und Abfluß liegenden Teil des Behälters durchströmt, und der zu behandelnde Elektrophoreseträger sich während der Behandlung in diesem durchströmten Teil des Behälters befindet. Wenn die Behandlung beziehungsweise Nachbehandlung des Elektrophoreseträgers mehrere Schritte umfaßt, werden die entsprechenden Flüssigkeiten nacheinander durch den Behälter geleitet. Das erfindungsgemäße Verfahren und die erfindungsgemäße Vorrichtung können für die Behandlung von Elektrophoreseträgern vor der Elektrophorese (z.B. für das oben erwähnte Auswaschen und Beladen) und für das Nachbehandeln (z.B. Färben) von Elektrophoreseträgern, auf denen die Fraktionen der aufgetrennter Proben vorliegen, verwendet werden.

Bei dem erfindungsgemäßen Verfahren zum Behandeln von Elektrophoreseträgern bleibt der Elektrophoreseträger während aller Schritte der Behandlung im gleichen Behälter. Die jeweils erforderliche Flüssigkeit wird in den Behälter eingebracht und abgezogen. Falls es sich um einen länger andauernden Behandlungsschritt handelt, wird die Flüssigkeit während einer entsprechend langen Zeit kontinuierlich durch den Behälter geleitet. Dabei fließt die Flüssigkeit am Elektrophoreseträger entlang. So wird die jeweilige chemische Umsetzung oder der Waschvorgang intensiviert, da durch die Strömung die mit der Oberfläche des Elektrophoreseträgers in Berührung stehende Flüssigkeit ständig erneuert wird. Mechanische Bewegung des Elektrophoreseträgers ist nicht erforderlich. Die Flüssigkeit wird entweder ständig erneuert oder im Kreis geführt.

Die erfindungsgemäße Vorrichtung zum Behandeln von Elektrophoreseträgern oder zum Nachbehandeln von Elektrophoreseträgern, auf denen die Fraktionen der Proben vorliegen, weist einen Behälter mit Zufluß und Abfluß für die zur Behandlung verwendeten Flüssigkeiten auf. Zu- und Abfluß liegen in verschiedenen Bereichen des Behälters, z.B. können sie einander gegenüber liegen. Die Flüssigkeiten durchströmen den Raum des Behälters zwischen Zufluß und Abfluß frei. Der Elektrophoreseträger befindet sich während der Behandlung in diesem durchströmten Teil des Behälters. Durch Regelung des Druckes, mit dem die Flüssigkeit jeweils in den Behälter eingeleitet wird, kann die Stärke der Strömung der Flüssigkeit reguliert werden. Die Vorrichtung wird vorzugsweise so ausgebildet, daß sich entweder eine im wesentlichen vertikale Strömungsrichtung ergibt oder eine horizontale. Durch die entsprechende Anordnung von Zu- und Abfluß im Behälter, kann auch eine Strömungsrichtung eingestellt werden, die zwischen vertikal und horizontal verläuft. Bevorzugt ist die Anordnung, bei der eine im wesentlichen vertikale Strömungsrichtung erzeugt wird und die Strömung von unten nach oben gerichtet ist. Wenn in einer solchen Vorrichtung ein z.B. SDS-Gel (Polyacrylamidgel mit SDS-(sodium dodecyl sulfat)Zusatz) eingebracht wird, das keinen festen Träger aufweist, wird das Gel durch die strömende Flüssigkeit in der Flüssigkeit schwimmend gehalten. Ist die Strömungsgeschwindigkeit groß genug, ist dabei der Elektrophoreseträger jeweils so ausgerichtet, daß die großen Flächen seiner Oberfläche im wesentlichen parallel zur Strömungsrichtung der Flüssigkeit liegen.

Die Elektrophoreseträger können auch durch übliche Halterungen in einer bestimmten Lage in dem Behälter gehalten werden. Diese Halterungen fassen den Elektrophoreseträger oben und/oder unten und/oder seitlich an. Die Halterungen können auch als Rahmen ausgestaltet sein. Diese Rahmen können z.B. so ausgeführt sein, daß sie eine Kammer oder mehrere Kammern enthalten, deren Wände von engmaschigem Gitter gebildet werden. Wenn die Elektrophoreseträger in Halterungen bzw. Rahmen gehalten werden, werden diese Halterungen/Rahmen vorzugsweise parallel zur Strömungsrichtung in der Vorrichtung gehalten. Bei der Verwendung von Halterungen/Rahmen ist es auch möglich, die Flüssigkeit bei vertikaler Strömungsrichtung von oben nach unten fließen zu lassen.

Anhand der folgenden Beispiele wird das Verfahren, die Vorrichtung und die Funktion der Vorrichtung erläutert, ohne die Erfindung auf diese Beispiele einzuschränken.

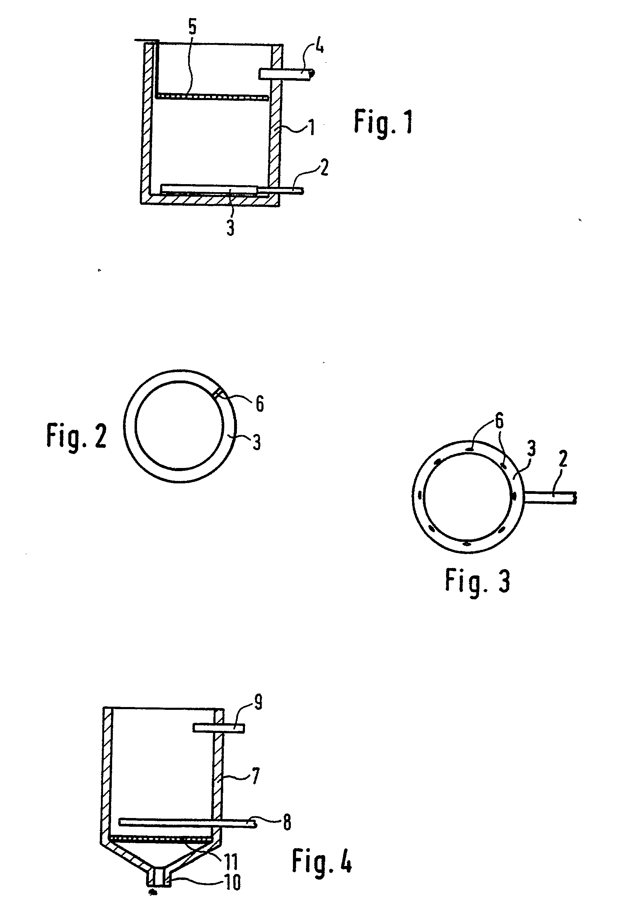

Figur 1 stellt eine einfache Ausführungsform der erfindungsgemäßen Vorrichtung für die Behandlung von jeweils einem Elektrophoreseträger dar. Diese Vorrichtung besteht aus einem zylindrischen Behälter (1), der mit dem Zuflußrohr(2) und dem Abflußrohr (4) versehen ist. Das Zuflußrohr (2) mündet in die Ringleitung (3). In den Behälter (1) kann das Gitter (5) eingehängt werden. Das Gitter (5) deckt die ganze Öffnung des Behälters (1) ab. Das Zuflußrohr und Abflußrohr sind mit den erforderlichen Regelelementen versehen. Das Abflußrohr ist auf dem in den Behälter ragende Ende mit einem Sieb versehen. Die Ringleitung besteht aus einem Rohr, das parallel zur Innenwand des Behälters verläuft. Die Wand des Rohres ist in ihrer oberen Hälfte mit Öffnungen versehen. Die Flüssigkeit der jeweiligen Behandlungsstufe wird unter Druck durch das Zuleitungsrohr (2) zugeführt, tritt durch die Öffnungen der Ringleitung in den Behälter ein und fließt durch das Abflußrohr (4) aus. Da die Flüssigkeit unter Druck durch die Öffnungen der Ringleitung in den Behälter eintritt, bildet sich eine Strömung. Der Druck der Flüssigkeit wird so eingestellt, daß der eingebrachte Elektrophoreseträger in der Flüssigkeit schwimmend gehalten wird, ohne an das Gitter (5) zu gelangen. Das Gitter (5) dient nur dazu, den Elektrophoreseträger zurückzuhalten, falls durch einen Betriebsfehler die Strömung zu stark wird.

Figur 2 zeigt einen Querschnitt durch die Ringleitung (3). Die Öffnung (6) ist eine Bohrung durch die Wand des Rohres, die radial verläuft unter einen Winkel von 45° gegen den Behälterboden.

Figur 3 zeigt eine Aufsicht auf das Zuflußrohr (2) und die Ringleitung (3). Die Öffnungen (6) sind in einem Kreis auf gleicher Höhe über dem Behälterboden angeordnet. Der Kreis liegt auf der Seite des Rohres der Ringleitung, die der Behältermitte zugewendet ist.

Die Behältergröße wird so gewählt, daß der Elektrophoreseträger eben (ohne Knickung) in dem durchströmten Teil des Behälters Platz hat. Wenn die Vorrichtung gemäß Figur 1 bis 3 z.B. für das Behandeln von jeweils einem Stück eines SDS-Elektrophoresegels der Größe 7 x 15 cm bis 10 x 15 cm verwendet werden soll, ist es zweckmäßig den Behälter mit etwa folgenden Maßen zu verwenden:

Innendurchmesser des Behälters (1):   180 mm

Innenhöhe des Behälters (1):   240 mm

Abstand des Abflußrohres (4) über dem Behälterboden:

180 mm

Abstand der Ringleitung (3) über dem Behälterboden:

2 mm

Außendurchmesser der Ringleitung (3):   120 mm

Außendurchmesser des Rohres der Ringleitung (3):

10 mm

Lichte Weite der Öffnungen der Ringleitung (3):

1 mm

Anzahl der Öffnungen der Ringleitung:   10

Die Flüssigkeit wird mit einem Druck von mindestens 60 Milibar eingeleitet. Das Elektrophoresegel wird so in der Flüssigkeit schwimmend gehalten, ohne an das Gitter (5) gespült zu werden.

Figur 4 zeigt eine Variante der erfindungsgemäßen Vorrichtung. Diese weist den zylindrischen Behälter (7) auf, der einen kegelförmigen nach unten verlaufenden Boden mit Öffnung (10) und Rohranschluß für Zu- und Abfluß hat. Zuflußrohr (8) mit Ringleitung und Abflußrohr (9) entsprechen den analogen Teilen der Vorrichtung gemäß Figur 1. Der zylindrische Teil des Behälters wird durch das Schutzgitter (11) vom kegelförmigen Teil des Behälters getrennt. Dieses Schutzgitter verhindert, daß das im Behälter eingebrachte Elektrophoresegel die Öffnung (10) verlegt. Die Zu- und Abflußrohre sind mit den entsprechenden Regelorganen ausgestattet.

Bei dieser Variante der Vorrichtung kann aus dem Behälter die Flüssigkeit rasch und vollständig durch Öffnung (10) abgezogen werden. Für einen kurzen Behandlungsschritt oder das Waschen des Behälters kann die entsprechende Flüssigkeit durch die Öffnung (10) abgezogen und eventuell auch zugeführt werden.

Beispiel 1

Als Beispiel für die Verwendung der erfindungsgemäßen Vorrichtung wird die Coomassie-Blau-Färbung eines SDS-Elektrophoresegeles (Polyacrylamidgel mit SDS (sodium dodecyl sulfate)Zusatz) unter Verwendung der Variante des Gerätes gemäß Figur 4 beschrieben:

Das Gel wird nach Beendigung der elektrophoretischen Trennung ohne Trägerplatte in den Behälter (7) gelegt. Die Färbelösung wird unter Druck durch das Zuflußrohr (8) zugeführt, durch das Abflußrohr (9) abgezogen und in dieser Weise während 20 bis 30 Minuten im Kreislauf umgepumpt. Durch die so gebildete Strömung der Flüssigkeit wird das Gel in der Flüssigkeit schwimmend gehalten. Dann wird der Behälter durch die Öffnung (10) völlig entleert. Danach wird Entfärbelösung während 30 Minuten unter Druck durch das Zuflußrohr (8) in den Behälter geleitet und durch das Abflußrohr (9) abgezogen. Es wird ständig frische Entfärbelösung zugeführt. (Es ist auch möglich, die Entfärbelösung unter Einschalten einer Regenerierungsstufe im Kreis zu führen.) Durch die Strömung der Flüssigkeit wird das Gel in der Flüssigkeit schwimmend gehalten. Dieser Vorgang (Entfärben) wird so lange ausgeführt bis der Untergrund (annähernd) farblos ist. Dann wird die Entfärbelösung durch die Öffnung (10) vollständig abgezogen.

EP 0 435 074 A2

Anschließend wird eine 2 %ige wäßrige Glycerinlösung durch das Zuflußrohr (8) zugeführt, durch das Abflußrohr (9) abgezogen und so 20 Minuten lang im Kreis umgepumpt. Dann wird das Gel aus dem Behälter genommen und getrocknet.

Beispiel 2

Als weiteres Beispiel wird die Silberfärbung eines SDS-Elektrophoresegels (Polyacrylamidgel mit SDS (sodium dodecyl sulfate)Zusatz) nach Oakley unter Verwendung der Vorrichtung gemäß Figur 4 beschrieben.

Das Gel wird nach Beendigung der elektrophoretischen Trennung ohne Trägerplatte in den Behälter (7) gelegt.

Schritt 1

Die Entfärbelösung, die zur Entfernung des Bromthymolblaus (Kennzeichnung der Front) dient, wird unter Druck durch das Zuflußrohr (8) zugeführt und durch das Abflußrohr (9) abgezogen und im Kreis geführt. Durch die so gebildete Strömung der Flüssigkeit wird das Gel in der Flüssigkeit schwimmend gehalten. Diese Entfärbung wird 20 Minuten lang ausgeführt. Zur vollständigen Entfernung der Entfärbelösung wird diese durch die Öffnung (10) abgezogen.

Schritt 2

Danach wird der Behälter (7) mit entionisiertem Wasser gefüllt und sofort wieder entleert. Das Zuführen und Abziehen des Wassers erfolgt durch Öffnung (10).

Schritt 3

10 % Glutardialdehydlösung wird unter Druck durch das Zuflußrohr (8) zugeführt und durch da Abflußrohr (9) abgezogen. Das Gel schwimmt in der Flüssigkeit. Diese Behandlung wird für 20 Minuten ausgeführt, wobei die Lösung ständig im Kreislauf umgepumpt wird. Zur vollständigen Entleerung wird die Glutaraldehydlösung durch Öffnung (10) abgezogen.

Schritt 4

Spülen mit entionisiertem Wasser erfolgt analog Schritt 2. Dieses Spülen wird mindestens 3 mal durchgeführt.

Schritt 5

Das Gel wird während 30 Minuten intensiv mit entionisiertem Wasser gespült, indem das Wasser unter Druck durch das Zuflußrohr (8) zufließt und durch das Abflußrohr (9) abfließt. Dabei wird ständig frisches entionisiertes Waser zugeführt. Danach wird das Wasser restlos durch die Öffnung (10) abgezogen.

Schritt 6

Spülen wie Schritt 2.

Schritt 7

Ammoniakalische Silbernitratlösung wird durch Öffnung (10) in den Behälter geleitet bis das Gel bedeckt ist. Die Anordnung bleibt so während 15 Minuten stehen.

Es ist auch möglich, diesen Schritt auszuführen, indem die Silbernitratlösung durch Zuflußrohr (8) unter Druck zugeführt wird und über Abflußrohr (9) abgezogen wird. Dabei wird die Silbernitratlösung während 10 Minuten im Kreislauf geführt.

Nach dieser Behandlung wird bei beiden Varianten die Silbernitratlösung restlos durch Öffnung (10) abgezogen. Der Behälter wird 3-5 mal kurz gereinigt, indem entionisiertes Wasser durch die Öffnung (10) zugeführt und abgezogen wird. Falls die Rohre (8) und (9) verwendet worden sind, müssen auch diese gründlich gereinigt werden.

5

Schritt 8

Über Zuflußrohr (8) wird die Entwicklerlösung zugeführt, über Abflußrohr (9) abgezogen und im Kreis umgepumpt. Nach 5 bis 10 Minuten wird die Entwicklerlösung über Öffnung (10) abgezogen. (Die Verweilzeit der Entwicklerlösung muß der Probe entsprechend gewählt werden.)

Schritt 9

Während einer halben Stunde wird entionisertes Wasser unter Druck durch Zuflußrohr (8) zugeführt und über Abflußrohr (9) abgezogen. Es wird ständig frisches Wasser zugeführt.

Analog können weitere Nachbehandlungsschritte angeschlossen werden. Nach Beendigung der Nachbehandlung wird das Gel dem Behälter entnommen und für die Aufbewahrung vorbereitet.

Beispiel 3

Waschen eines Polyacrylamidgels, das nach dem Waschvorgang gewünschtenfalls getrocknet und dadurch lagerfähig und zum Rehydratieren geeignet wird.

Schritt 1

Nach erfolgter Polymerisation wird das Polyacrylamidgel (gewünschtenfalls ein gewebegestütztes Gel) in den mit entionisiertem Wasser gefüllten Behälter (gemäß Abbildung 4) gelegt. Durch den Behälter läßt man nun von unten nach oben während 30 Minuten frisches entmineralisiertes Wasser so strömen, daß das Gel in der Schwebe gehalten wird. Dabei werden alle gelösten Stoffe, vorzugsweise monomeres Acrylamid, monomerer Vernetzer und überschüssiges Ammoniumpersulfat ausgewaschen.

Schritt 2

Nach Ablauf der Waschzeit wird die Zufuhr des entmineralisierten Wassers gestoppt und das Waschwasser wird durch die Bodenöffnung abgezogen. Nach vollständiger Entleerung des Behälters wird dieser mit einer wässerigen Glycerinlösung gefüllt und diese Lösung 15-30 Minuten im Kreislauf gepumpt. Danach wird die Lösung durch die Bodenöffnung abgezogen. Kurz bevor die Lösung völlig entfernt ist wird das Gel aus dem Behälter genommen.

Schritt 3

Das Gel wird auf eine hydrophobe Unterlage gelegt, mit einer Polyesterfolie abgedeckt und durch leichtes gleichmäßiges Andrücken wird die überschüssige Flüssigkeit abgepreßt. Anschließend wird das Gel nach üblichen Verfahren (Lufttrocknung oder Trocknung in der Mikrowelle) getrocknet. So behandelte Gele sind auch nach Lagerung zum Rehydratieren geeignet.

Analog können auch Polyacrylamidgele, die auf einem Träger fixiert sind, behandelt werden.

Die Beispiele können analog auch unter Verwendung anderer Elektrophoreseträger, die gegebenenfalls in einem wie oben beschriebenen Rahmen oder einer Halterung gehalten werden, ausgeführt werden.

Die erfindungsgemäße Vorrichtung kann in vieler Hinsicht abgewandelt werden.

Die in den obigen Beispielen beschriebene Zuleitung, die als Ringleitung ausgebildet ist, kann auch in anderen an sich bekannten Formen ausgebildet sein. Es kann eine Ringleitung vorgesehen sein, die fest mit dem Mantel des Behälters verbunden ist. Die Ringleitung mit den Austrittsöffnungen des Zuflusses kann auch durch einen Siebboden ersetzt werden. Insbesondere in schmalen Behältern kann anstelle der Ringleitung ein gerades Rohr, das die entsprechenden Öffnungen aufweist, verwendet werden. Anstelle eines solchen Rohres kann auch eine schlitzförmige Öffnung in der Behälterwand für den Zufluß und eventuell auch den Abfluß vorgesehen sein. Diese Anordnung ist auch besonders vorteilhaft, wenn die Behandlung eines Elektrophoreseträgers in horizontaler Lage erfolgt. (Die Vorrichtung kann dann z.B. wie folgt gestaltet sein: Die Strömungsrichtung der Flüssigkeit ist horizontal, der Behälter weist eine geringe Höhe auf, die Schlitze für Zu- und Abfluß der Flüssigkeit befinden sich in einander gegenüberliegenden Seiten des Behälters etwa in der Verlängerung der Längsfläche des Elektrophoreseträgers.)

Der Boden des Behälters kann eben oder gewölbt ausgeführt sein.

Wenn mehrere Elektrophoreseträger gleichzeitig in einem Behälter behandelt werden sollen, ist es zweckmäßig, die Zu- und Abfuhr der Flüssigkeit gleichmäßig über den durchströmten Teil des Behälters zu verteilen. Das kann z.B. dadurch erzielt werden, daß nebeneinander (vorzugsweise der Anzahl der zu behandelnden Elektrophoreseträger entsprechend) mehrere Ringleitungen, Zuleitungsrohre oder Schlitze angeordnet sind.

Die Größe der Vorrichtung wird vorteilhaft entsprechend der Größe der verwendeten Elektrophoreseträger gewählt. Als Richtwert für die Größe des Behälters gilt, daß der einzelne Elektrophoreseträger an allen Seiten von einer Flüssigkeitsschicht von mindestens 1 bis 10 mm, vorzugsweise mindestens 3 bis 5 mm Schichtdicke umgeben ist.

Wenn Elektrophoreseträger sehr unterschiedlicher Größe in der selben Vorrichtung behandelt werden sollen, ist es zweckmäßig, den Abfluß (4 in Figur 1, 9 in Figur 4) so zu gestalten, daß die Höhe des Flüssigkeitsstandes mit der Größe des Elektrophoreseträgers variiert werden kann. Das ist z.B. dadurch zu erreichen, daß in verschiedenen Höhen des Behälters Abflußöffnungen vorgesehen sind. Für die Behandlung z.B. eines kleinen Elektrophoreseträgers wird eine der unteren Abflußöffnungen verwendet. Eine andere Möglichkeit besteht darin, die Abflußöffnung über einen Teil der Höhe der Behälterwand verschiebbar zu gestalten.

Für die Verwendung der genannten Rahmen werden entsprechende Haltevorrichtungen vorgesehen, z.B. Schienen, in denen die Rahmen eingeschoben werden.

Der Behälter der Vorrichtung kann auch mit Heizspiralen/Wärmeaustauscher umgeben sein. Die Flüssigkeiten können außerdem mit der entsprechenden Temperatur in den Behälter geleitet werden. Dadurch kann jeder Behandlungsschritt bei optimaler konstanter Temperatur durchgeführt werden. Ferner werden durch den gleichbleibenden Temperaturverlauf der Behandlung die Ergebnisse bei Serienuntersuchungen normierbar. Wird die Behandlung bei erhöhter Temperatur ausgeführt, wird eine Verkürzung der Behandlungszeit erreicht.

Zur Unterstützung der Bewegung der Flüssigkeit kann zusätzlich ein Rührer (vorzugsweise Magnetrührer) vorgesehen werden.

Die beschriebenen Behandlungsverfahren können auch automatisiert werden, indem die Regelung des Zu- und Abflußes der Flüssigkeiten über ein entsprechendes Steuergerät (z.B. PC) erfolgt.

Die Vorrichtung kann auch so ausgeführt werden, daß mehrere Behälter, wie sie oben beschrieben worden sind, vorgesehen sind, worin getrennt voneinander mehrere Behandlungen ausgeführt werden können. Je nach Schaltung des PC, können diese Behandlungen parallel laufen oder völlig unabhängig voneinander.

In vielen Behandlungsverfahren von Elektrophoreseträgern, insbesondere beim Färben, ist es zweckmäßig Vorratsbehälter für relativ konzentrierte Reagenzlösungen in der Vorrichtung vorzusehen. Diese Reagentien werden vor dem Einleiten in den Behandlungsbehälter direkt in der Zufuhrleitung oder in einer speziellen Mischkammer in dieser Zufuhrleitung mit der entsprechenden Lösungsmittelmenge gemischt.

Vergleicht man das konventionelle manuelle Behandeln und die bekannten Vorrichtungen mit dem erfindungsgemäßen Verfahren und der erfindungsgemäßen Vorrichtung, so sind folgende Vorteile klar ersichtlich:

1. Verglichen mit der herkömmlichen Behandlung durch Ausführungen der Schritte von Hand, wird ein enormer Zeitgewinn für den Analytiker erreicht.

Bei dem erfindungsgemäßen Vorgehen muß der Analytiker die einzelnen Schritte nur durch Umschalten der Regelorgane einleiten, kann aber ansonsten die Vorrichtung und somit die Behandlung sich selbst überlassen. Dieses Regeln kann auch über einen Computer erfolgen. Bei dem konventionellen manuellen Verfahren sind häufige Manipulationen erforderlich. (Besonders groß ist dabei der Arbeits- und Zeitaufwand des Analytikers bei den längeren Behandlungsschritten, wie z.B. bei Spülvorgängen zwischen Färbe/Entfärbeschritten, bei denen mindestens fünfmaliges Spülen erforderlich ist, mit je einem Zeitbedarf von 5 bis 10 Minuten.) Bei dem erfindungsgemäßen Verfahren wird hingegen kontinuierlich während 30 Minuten gespült, ohne daß der Analytiker eingreifen muß.

2. Der Zeitbedarf der einzelnen Behandlungsschritte wird außerdem verkürzt, da die mit der Oberfläche des Elektrophoreseträgers in Berührung stehende Flüssigkeit gemäß der Erfindung durch die Strömung ständig erneuert wird.

3. Bei dem erfindungsgemäßen Verfahren wird bedingt durch den kontinuierlichen Betrieb zunächst eine größere Menge von Reagentien eingesetzt. Durch Anpassen der Größe des Gerätes an die Größe des zubehandelnden Gels, kann der Reagentienverbrauch optimiert werden. Durch Regenerieren der gebrauchten Reagenzien (Recycling) kann der Verbrauch an Reagentien jedoch zu einer dem konventionellen Verfahren entsprechenden Menge reduziert werden.

4. Die erfindungsgemäße Vorrichtung ist apparativ einfach, benötigt keine mechanisch beweglichen Teile. Die Vorrichtung ist für alle gängigen Elektrophoreseträger geeignet. Auch Elektrophoreseträger verschiedenster Größe können darin behandelt werden. Auch mehrere Elektrophoreseträger können gleichzeitig behandelt werden, wenn diese wie bereits erwähnt (z.B. im Rahmen) gehalten werden. Die Elektrophoreseträger werden einfach in den Behälter gelegt (oder in die Rahmen, mit denen sie dann in den Behälter geschoben werden). Aufwendiges Montieren der Elektrophoreseträger in z.B. bewegliche Haltevorrichtungen entfällt.

**Ansprüche**

1. Verfahren zum Behandeln von Elektrophoreseträgern, dadurch gekennzeichnet, daß die zur Behandlung verwendete Flüssigkeit dem Elektrophoreseträger entlang fließt.

2. Verfahren nach Anspruch 1 zum Behandeln von Elektrophoreseträgern in mehreren Schritten, dadurch gekennzeichnet, daß die zur Behandlung verwendeten Flüssigkeiten nacheinander dem zu behandelnden Elektrophoreseträger entlang fließen.

3. Vorrichtung zum Behandeln von Elektrophoreseträgern, die einen Behälter mit Zufluß und Abfluß für die zur Behandlung verwendete Flüssigkeit aufweist, in der die Flüssigkeit den zwischen Zu- und Abfluß liegenden Teil des Behälters durchströmt, und der zu behandelnde Elektrophoreseträger sich während der Behandlung in diesem durchströmten Teil des Behälters befindet.

4. Vorrichtung nach Anspruch 3 zum Behandeln von Elektrophoreseträgern in mehreren Schritten, die einen Behälter mit Zufluß und Abfluß für die zur Behandlung verwendete(n) Flüssigkeit(en) aufweist, wobei Zu- und Abfluß in verschiedenen Bereichen des Behälters liegen, die Flüssigkeit(en) den zwischen Zu- und Abfluß liegenden Teil des Behälters (nacheinander) frei durchströmt(en), und der nachzubehandelnde Elektrophoreseträger sich während der Behandlung in diesem durchströmten Teil des Behälters befindet.

5. Vorrichtung nach Anspruch 3 oder 4, in der Zu- und Abfluß so angeordnet sind, daß die Strömungsrichtung der Flüssigkeit(en) im wesentlichen vertikal oder horizontal ist.

6. Vorrichtung nach Anspruch 3, 4 oder 5, in der der Zufluß im unteren Teil des Behälters und der Abfluß im oberen Teil des Behälters liegt, so daß die unter Druck eingeleitete Flüssigkeit eine Strömung von unten nach oben ergibt.

Fig. 1

Fig. 2

Fig. 3

Fig. 4